# EUROPEAN PATENT APPLICATION

(11) **EP 1 128 653 A1**
(43) Date of publication of application: **29.08.2001**
(21) Application number: 00103716.7
(22) Date of filing: 22.02.2000
(51) Int. Cl.: H04M 17/00, G07F 7/08

(54) **Method for handling communications, a communication system, a processing means, a logical node, a communication station, a computer program and a computer program product**

(71) Applicant: TELEFONAKTIEBOLAGET LM ERICSSON (publ), 126 25 Stockholm (SE)
(72) Inventor: Keller, Ralf, 52146 Würselen (DE); Zavagli,Guido, 52062 Aachen (DE)
(74) Representative: Jostarndt, Hans-Dieter

(57) **Abstract**

The invention relates to a method for allowing a communication station access to a communication system.

According to the invention the method is carried out in a way that a logical node of the communication system checks a reception of at least one payment message, wherein the payment message received by the communication system from a communication station, wherein the payment message contains information which constitutes digital money and wherein by sending the payment message digital money for a payment of communication costs is transferred from the communication station to the communication system.

The invention further relates to a communication system, a processing means, a logical node, a communication station, a computer program and a computer program product.

## Description

### Field of the Invention:

The present invention relates to a method for allowing a communication station access to a communication system.

The invention further relates to a communication system which is capable of handling communications and services for communication stations.

The invention also relates to a processing means, a logical node and a mobile communication station, capable of communicating in a communication system, a computer program and a computer program product.

According to the state of the art, payment for mobile phone services is either performed via a monthly bill sent to the subscriber or via so-called "prepaid" services. Monthly billing carries the risks of "bad debt", mainly caused by subscribers not paying their invoice or paying very late. For this reason, many operators require their customers to enable the phone bill to be automatically charged from their bank account.

To reduce the risks of bad debt, and to attract new customers who prefer not to be tight to a long term contract, mobile operators have introduced prepaid services. These services provide the subscribers with the possibility to prepay the telephone subscription. Prepaid subscriptions are also attractive for customers who are interested in an anonymous subscription.

In general, direct payment for services is gaining more and more interest in the Internet and also in Internet based services for mobile communication networks.

Prepaid subscriptions are for example very well suited for users with a relative low monthly bill, who have a changing consumption or just want to try out. Furthermore prepaid subscriptions are especially well suited for persons with a relatively low income as teenagers in order to be able to trigger the costs and not exceed a specific amount. Loading the prepaid account is achieved by bank transfers, or more frequently, by the purchase of a voucher, e.g. a scratch-card, at a newsagent. After the purchase of the voucher, the customer has to call the operator and activate his prepaid account.

One main disadvantage of prepaid subscriptions is that a subscriber has to pay for service he or she may never use.

Another main disadvantage of prepaid subscription systems for users is that the purchase of vouchers is cumbersome, especially because the user must buy them at specific shops, during opening hours. The option of reloading the prepaid account via bank transfer or credit card brings back the problems stated above, and effectively nullifies the anonymity aspect of prepaid subscription.

Due to technical reasons, compared to regular subscriptions only a limited set of services can be offered to prepaid subscribers. For example, the subscribers might not be able to roam to foreign countries and to have an anonymous subscription. The subscribers must, if they want to roam, allow withdraw of calling cost from their bank account and hence the anonymity gets lost.

For the operator, prepaid as well as "normal" subscription still includes the handling of charging records, toll ticketing, charging centres etc.. This requires complex structures and involves a lot of costly overhead.

According to the state of the art card and/or coin operated pay phones, which are also called public phones, contain a control means for checking if a certain amount of money is paid from the user of the telephone to the telephone. The communication system sends impulses which order the telephone to attract a certain amount of money from the user of the pay phone or to reprogram a microprocessor contained in a telephone card used at the side of the public phone.

Known credit card phones are operated in a way in which an identification number of the credit card is sent to the communication system. The communication system determines, checks and/or controls the amount of money which has to be paid for covering the communication costs and receives in a separate step money from the issuer of the credit card.

This involves the disadvantage, that details of the telephone call have to be stored for a long time in order to prove that the cardholder has really made the calls which are charged to him. This requires a huge amount of data storage capacity and involves problems in guaranteeing confidentiality of telecommunication data.

It is an object of the invention to create a method which effectively and efficiently handles payment of communication costs.

This problem is solved advantageously by the method of claim 1, the communication system of claim 13, the processing means of claim 15, the logical node of claim 16, the communication station of claim 17, the computer program of claim 22, the computer program product of claim 23 and the computer program product of claim 24.

A further object of the invention is a method for allowing a communication station access to a communication system, wherein a logical node of the communication system checks if the communication station sends at least one payment message to the communication system, wherein the payment message contains information which constitutes digital money and wherein by sending the payment message digital money for a payment of communication costs is transferred from the communication station to the communication system.

According to the invention the communication station sends digital money for a payment of communication costs to the communication system and a logical node of the communication system checks if digital money is received.

Further advantageous embodiments and implementations are achieved according to the claims 2 to 12, 14 and 18 to 21.

According to the invention a payment of communication costs is performed entirely different than it is known in the state of the art.

In contrast to known card and/or coin operated pay phones the communication station according to the invention transfers digital money to the communication system.

The invention includes a method for handling communications for at least one communication station, wherein the communication station communicates with a communication system, wherein the communication station online pays money to the communication system to cover communication costs.

The invention relates to an online payment of communication costs, especially mobile calling costs for a mobile communication station.

Examples of the mobile communication station include mobile telephones, faxes, notebooks or personal digital assistants. However, neither the communication station nor its mobile version are limited to these examples. More and more apparatuses are equipped with devices for sending and/or receiving information and become therefore communication stations, especially mobile stations. Thus the invention can be used in combination with these devices. The word "mobile" means in this context, that the system can be moved without an exchange of communication cables. However, the invention especially refers to communication terminals which allow an user to communicate through a multiple access communication system with other users.

In this sense, an user could also pay for the costs of his internet access from home even it is convenient to do this via a telephone bill.

The online payment of mobile calling costs provides a solution for both, users and operators. Payment for services is performed at the time the service is used, not earlier and not later. The user has a correct, up-to-date cost-overview and the operator gets the money instantaneously.

A message exchange can be performed in-band, especially in case of data services (just with a different recipient) or out-band for both voice and data service. Within the Global System for Mobile Communication (GSM) system, one or more logical signalling channels as Short Message Service (SMS) or Unstructured Supplementary Services Data (USSD) provide ideal carriers for in-band or out-band message exchange. It is advantageous to use and to standardise one or more of the mentioned logical signalling channels for payment services. However, in systems with a higher throughput of data the invention can be used with other standards of submitting money transfer information.

The invention especially relates to communication within cellular communication systems as the Global System for Mobile Communication (GSM), the General Packet Radio Services (GPRS), Personal Digital Cellular (PDC) or the Universal Mobile Telecommunication System (UMTS) and other cellular communication networks.

Whereas in the state of the art the communication system has to know information about the subscriber, especially the subscriber identity, especially the International Mobile Subscriber Identity (IMSI), the invention allows communication terminals, especially mobile user equipments to communicate anonymously.

Even though the invention is especially well suited for communications within such cellular communication systems, it may be used in other communication systems as well.

In an advantageous implementation of the method, the communication system, the processing means, the logical node, the communication station and the computer program, the communication station sends the payment message to pay the communication costs after having received a payment request message from the communication system.

This implementation allows to send parameters of a payment to the communication station. It is especially advantageous that the request message contains information about an amount which has to be transferred and/or provides information about payment conditions.

For example one request message can order the communication station to perform more than one payment, for example a series of payments separated by a certain time interval.

Therefore recurring payments could be initiated.

In a preferred embodiment of the method, the communication system, the processing means, the logical node, the communication station and the computer program, the communication system sends an acknowledgement message for the payment message to the communication station after having received the payment message.

This acknowledgement message informs the communication station, respectively its user about the reception of the digital money by the communication station.

In an advantageous implementation of the method, the communication system, the processing means, the logical node, the communication station and the computer program, the communication station sends money in form of digital coins to the communication system. This is especially advantageous whenever small amounts of money have to be transferred. For example an amount is sent in form of digital coins and the change is transferred back in form of digital coins as well.

In a preferred embodiment of the method, the communication system, the processing means, the logical node, the communication station and the computer program, before the digital coins are transferred from the communication station to the communication system the digital coins are stored within the communication station. This is advantageous as the use of coins is well known to users.

In an advantageous implementation of the method, the communication system, the processing means, the logical node, the communication station and the computer program, the digital coins are stored outside the communication station.

This allows to keep the data storage capacity of the communication station low. It further facilitates an usage of the communication station because the necessity of protecting the communication station against an unauthorised usage is reduced.

In a preferred embodiment of the method, the communication system, the processing means, the logical node, the communication station and the computer program, the digital coins are stored in a personal security companion PSC, here acting as a wireless wallet.

The personal security companion PSC is a flexible device which can be used for a variety of purposes. This allows to use the personal security companion PSC not only for the payment of communication costs but also for a payment of goods and services ordered through the communication system, for example in an on-line shop. However, the personal security companion PSC can also be used to pay at other places, for example in conventional shops or at ticket machines.

Preferably the communication system contains at least one means for receiving digital money from the communication station.

In an advantageous implementation of the method, the communication system, the processing means, the logical node, the communication station and the computer program, the communication system is a multiple access communication system.

Multiple access communication systems such as cellular telephone networks have made phenomenal strikes in operations world-wide. The invention allows these communication systems to meet increasing capacity needs of a rapidly growing number of users as well as efficiently charging their communication costs.

In a preferred embodiment of the method, the communication system, the processing means, the logical node, the communication station and the computer program, the processing means are implemented in the communication system which is capable of handling communications for communication stations, wherein the processing means is capable of checking a reception of digital money.

The processing means enables the communication system to give access only to that communication stations from which money in an appropriate amount has been received.

In an advantageous implementation of the method, the communication system, the processing means, the logical node, the communication station and computer program, the logical node, capable of being implemented in a communication system and/or a billing system, characterised in that the logical node is capable of checking if a payment message of the communication station is sent to the communication system according to a rule for the payment.

This further object of the invention is a special node, which can be implemented in the communication station and /or in a separate billing system. For example, it is possible to implement the logical node in a switch of the communication station. However, it is also possible to implement the logical node in another part of the communication system or to connect it to another part of the communication system, for example to a base station.

In the case, that the logical node is implemented to the billing system, it is possible to use one of the already existing billing systems to simultaneously handle communications which are paid by payment messages according to the invention and another communications which are charged conventionally.

When the logical node is implemented or related to the billing system, the logical node can determine, whether a known account of a subscriber has to be charged or whether the communication station has to be ordered to pay digital money to the communication station.

In this preferred embodiment it is possible to implement a sending of payment messages according to the invention within an already existing communication system with only slight modifications and to continue making use of an already existing billing system. This has the advantage, that the effort for billing is minimised for every communication which is handled according to the invention. However, the communication system can allow access to conventional communication stations which are not capable of sending payment messages or to transfer digital money in other ways to the communication system.

In a preferred embodiment of the method, the communication system, the processing means, the logical node, the communication station and the computer program, the communication station is a mobile communication station.

In an advantageous implementation of the method, the communication system, the processing means, the logical node, the communication station and the computer program, the communication station is capable of communicating in a multiple access communication system.

In a preferred embodiment of the method, the communication system, the processing means, the logical node, the communication station and the computer program, the communication station contains at least one means for sending payment messages to the communication system according to a predefined rule.

This has the advantage, that the communication station is capable of initiating payments itself. Therefore this implementation reduces the number of messages which are exchanged between the communication station and the communication system.

In an advantageous implementation of the method, the communication system, the processing means, the logical node, the communication station and the computer program, the communication station contains means for evaluating and/or storing the rule.

Storing the rule in the communication station has the advantage, that efforts for evaluation processes are minimised. The storing can be performed flexibly in order to be adapted to different tariff systems. An evaluation of the rule is advantageous too, as the evaluation can be adapted to various parameters.

In a preferred embodiment of the method, the communication system, the processing means, the logical node, the communication station and the computer program, the computer program is capable of controlling access of at least one communication station to the communication system, wherein the computer program initiates and/or checks if digital money for a payment of communication costs to the communication system is transferred.

Such a computer program has the advantage, that it controls that only as much money is transferred from the communication station to the communication system as it is necessary to cover communication costs.

In an advantageous implementation of the method, the communication system, the processing means, the logical node, the communication station and the computer program, a computer program product is used which contains the above described computer program, wherein the computer program is loadable in the communication station.

In a preferred embodiment of the method, the communication system, the processing means, the logical node, the communication station and the computer program, a computer program product is used, wherein the computer program contains the above described computer program, wherein the computer program is loadable in the logical node.

In the following the invention will be further described by means of examples and by means of the figures:
- Fig. 1: shows sequences for a first implementation of a payment method according to the invention.
- Fig. 2: shows a schematic overview of a payment according to a preferred embodiment of the invention.

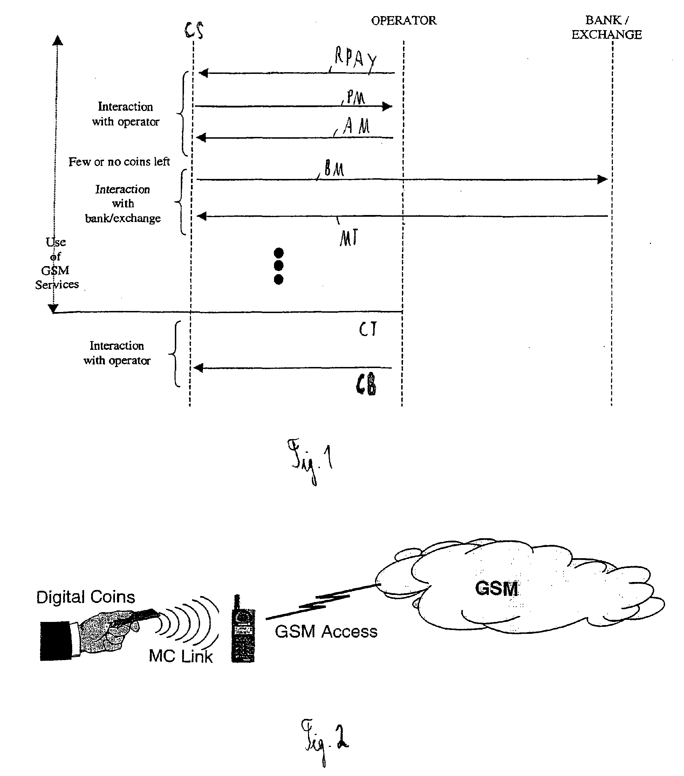

The procedure described in Fig. 1 is a part of a more complex communication interaction. As the other steps are not important in view of the invention, they will not be further described.

A communication is set up before it is established between a mobile communication station and a communication system, for example by at least one setup message for each communication. The setup message may contain information which is relevant to the payment of communication costs and is for example related to the bandwidth of the communication system or to other parameters which influence the costs of the communication as the setup may be performed with known setup messages, the setup procedure is not represented in Fig. 1.

The setup message may also contain information of a special subscription of a subscriber using the communication station to communicate with the communication network. However, in cases in which anonymity of the user is desired, the setup message may not contain any information about the user.

Optionally a request message RPAY which initiates a payment is sent from the communication system or its operator to the communication station. The payment request message may be sent at the beginning of the communication and/or during the communication.

The request message may ask the communication station to send one or more payment messages. For example one payment message causes the communication station to pay every few seconds a certain amount of digital money to the communication system.

In the following, the description of the payment request message relates to the advantageous case, that an user of the communication station owns a special subscription with an operator of the communication station. However, the described example is not limited to this case.

If the user owns a special subscription with the operator of the mobile network, allowing the user to access standard communication services or if the user has got a special authentication, the network operator sends a preferably authenticated request after a certain time interval (a "slice"), upon which the user replies with the requested amount of money in form of digital coins to the operator.

The time interval upon which the user replies with the requested amount of money can be adjusted to reflect the ongoing costs in case always a fixed amount is transmitted from the user to the operator, e.g., shorter intervals for long distance calls from a foreign operator and longer intervals for calls to subscribers within the same net.

In the case of recurring payments it is preferred, that after each payment request message the communication station answers with sending a payment message to the communication system, respectively to the operator of the communication system. However, it is also possible, that after one payment request message which contains a rule or a procedure for sending further payment messages the communication station answers with payment messages which follow the required rules.

The payment in form of digital coins is an advantageous implementation of a payment message according to the invention. However, the invention is not limited to the case, wherein the payment message contains a transfer of digital coins. The payment message contains information, which constitutes a transfer of money to the communication system. The information is for example a randomly generated number which is digitally signed in a form that a digital certificate of authenticity has been generated.

Optionally, the operator can acknowledge receipt of digital money, especially of digital coins. The operator and/or the communication system which is operated by him can perform the acknowledgement within one or more acknowledge messages. The acknowledge messages are not necessary. However, sending acknowledge messages to the communication station has the afterwards mentioned advantages.

In some applications it is desired that the communication station uses different qualities of services. These different qualities of services relate for example to different ways of communicating. For example one quality of service (QOS) specification relates to voice communication and a different quality of service (QOS) specification relates to video communication. If the user of the communication station desires to use video communication higher bandwidth has to be assigned to him. Respectively the costs which are charged to him could be higher.

Through the acknowledge message the communication station is notified, that the communication station has to accept the payment and that it can communicate with the higher bandwidth needed for the video communication.

In this case for example a Resource Reservation Protocol (RSVP) or a Ticket Signalling Protocol (TSP) may be used.

The described methods can be combined with a refilling of digital money at the side of the communication station and/or the user who uses the communication station.

In this case the communication station sends a buying message BM to a network operated by an authority which is capable of issuing and/or transferring digital money, especially digital coins. This authority is for example a bank and/or an exchange organisation.

The money transfer is not limited to buying digital coins, but buying digital coins is especially preferred, as it may be performed within a short time and with low communication and an encryption afford.

If a buying of digital money, especially digital coins is desired, for example if only a few or no digital money is left at the side of the user and/or the communication station. The money is bought from a bank or an exchange organisation. For buying the digital money an interaction between the communication station and the bank or exchange organisation takes place.

The combination of an internal money transfer between the communication station and the communication system with an external money transfer from a bank and/or an exchange organisation to the communication station, or a device related to the communication station or to the user of the communication station involves many benefits.

The communication station starts this interaction between the communication station and the bank or exchange organisation by sending a buying message BM to the bank or the exchange organisation or to a network operated by the bank or the exchange organisation. The bank or exchange organisation, respectively the network operated by them checks if it gets an appropriated value or a credit for an equivalent amount of money ordered through the buying message. As soon as an equivalent has been checked, the bank, exchange organisation or the network operated by them answers the buying message BM with a money transfer message MT.

The time at which the communication station sends the buying message is not limited. However, it is especially advantageous, that the sending of the buying message BM is related to the amount of digital money, especially digital coins, which are left at the user's side.

It is advantageous, that the bank or exchange authority answers the buying message as soon as possible. In the case, that it can be foreseen, that between the sending of the buying message BM and the sending of the money transfer message MT a certain time interval occurs, it is preferred, that the communication station generates the buying message BM as soon as the amount of money which it can use to cover communication costs decreases to a certain, especially predefined, limit.

One advantageous implementation of the buying procedure is described afterwards.

As soon as no or not enough digital coins are left at the user side, the user sets up a connection to a bank or an exchange in order to purchase digital software coins. This purchase can be performed by use of existing payment protocols such as Secure Electronic Transactions (SET) or the GeldKarte. Alternatively, a banking protocol such as Home Banking Computer Interface (HBCI) or Open Financial Exchange (OFX) might be used to trigger a bank transaction, which also results in a payment. Optionally, the user has to take care of the "amount" of digital coins in his/her wallet, but the automated solution is preferred to reduce the level of user attention, this makes it as easy as possible with as few user interactions as possible.

After the bank or the exchange organisation has verified the authenticity of the payment request, for example by analysing a digital certificate and/or by receiving a money transfer it sends a money transfer message MT to the communication station. This money transfer message MT refills the amount of money which can be used by the communication station. For example a digital wallet is refilled with digital coins.

Every of the described messages can be sent one or more times. However, the invention is in no way limited to sending a certain number of messages. Most of the messages are optionally. Especially the buying message BM and the money transfer message MT are optionally. Especially in the case in which an user wants to achieve a guaranteed anonymity it may be desired to buy money in advance and to use only digital money bought in advance.

Further steps of communication as a call termination message are not important in view of the invention. Therefore they are only described as much as it is useful to implement advantageous embodiments of the invention.

After the communication and/or all communications of the communication station are finished a call termination message (CT) is sent from the communication system to the communication station.

This call termination message can be sent as it is known in the state of the art. However, it is advantageous to modify the call termination message in order that at least one logical communication channel remains open. For example an Unstructured Supplementary Services Data (USSD) channel, which can be a logical channel as well as a separate physical channel, can remain open. Such an open channel allows the communication system to send a charge back message CB to the communication station.

However, sending of a charge back message CB is optional and can be avoided if the payment messages are sent after time intervals which are basically equal to time intervals for charging.

Storing the digital coins is preferably performed by using a personal security companion PSC because this relieves the mobile phone from the burden to offer the high security level an user would expect from a device acting as a wallet. The PSC is a small mobile device, optionally with a card reader, which can communicate with the mobile phone via an appropriate transmission technology, especially short-range radio transmission technology such as Bluetooth. A PSC offers a secure environment. The PSC can serve as a physical storage medium, and provides the cryptography functionality required for securing the storage. It is as well possible to store the digital coins, which are preferably adapted software routines, in the PSC itself, provided that the PSC itself offers high enough protection against attacks from outside.

A preferred configuration of a personal security companion PSC and a mobile phone acting as communication station according to the invention is depicted in Fig. 2.

This method is also very practical for the user, so that it can be called the best method of carrying out the invention.

Alternatively, this kind of secure storage could be provided in a WIM (WAP Identification Module).

Though an interaction with a bank or an exchange institution for changing digital coins between different standards, currencies and formats is not necessary, it is especially useful to give users of the mobile station a bigger flexibility to pay their communication costs in communication systems liberally without a limitation to a special currency of digital money and without the limitation of the size of their digital purse.

The amount of money that can be bought from the bank or exchange in form of digital coins can be fixed or free. In any case, if the call is terminated before the last coin is used up, the operator can return the change, especially the unused amount of the coin in form of coins with lower value, to the user. The PSC acts as a mobile wallet because it manages the storage and the access to different digital coins. It is even possible to have digital coins, which belong to different electronic cash systems like e.g. DigiCash and CyberCoins. In such a case an exchange between different e-cash systems can take place if coins of one type are sent to an exchange organisation, which returns digital coins of a needed type. This might be especially useful if there is no "standard" electronic payment method and therefore at the moment "useless" digital coins are exchanged against at the moment "useful" coins.

It depends, of course, on the fee that has to be paid for the exchange, whether this is an used feature or not. It must, however, be possible to "clean" the PSC from "foreign" digital coins, e.g., after a long business trip through different countries with different operators and different types of digital coins.

The user can start the process of buying digital coins, by, e.g., pressing a button, or it could be triggered automatically by the mobile phone or by the PSC (the phone/PSC checks regularly whether enough coins are in the wallet and triggers the respective actions). The request to the bank or exchange can be pre-configured, i.e., always the same amount of digital coins is requested.

The invention describes a solution that enables a subscriber to perform online payment for mobile services, e.g., voice and data calls in various communication systems, especially in cellular communication systems. The invention is, of course, also applicable to fixed network services. Several options in the main solution are outlined. A preferable solution is based on digital software tokens that can be stored on a personal security companion PSC.

The invention allows an online payment of communication costs and therefore involves some major benefits for the user. One of these benefits is that the method of payment is easy to use. The user has the ability to make calls anytime. Provided that the digital coins are anonymous the communication can be performed anonymously. The user further has a direct control of calling costs. Furthermore the invention is potentially applicable to different network providers, therefore the tight coupling between a subscriber and his home network can be avoided.

Different to prepaid services, nothing has to be paid in advance. Furthermore no money is lost for unused service.

The benefits to the operator of the communication system are, that compared to monthly bills services are paid instantaneously. Furthermore the complexity of the charging process is reduced. No charging records have to be stored and printed out, or the storage can be limited to a short time. No sending of monthly bills is necessary.

In case of the involvement of a PSC in the transactions, the user has only one device where digital coins are stored, which could, for example, also be used to pay for other goods. Usage of a PSC simplifies the design of the mobile phone, because the mobile phone must not provide the high security level of the PSC, which is optimised for security.

The invention allows a communication station and/or an user of the communication station to pay costs for using a multiple access communication system instantaneously.

The payment is performed without the necessity of a data exchange with external networks.

However, a combination with external networks can be used to reload money which is accessible by the communication station.

Payment of communication costs by sending payment messages which contain digital money has the advantage, that only very little bandwidth of the network and/or only very few data storage capacity in the communication station is needed.

Therefore the invention is especially useful for multiple access communication systems which give access to a high number of especially mobile communication stations. Even with a relative low bandwidth of data links and a low data storage capacity in the mobile communication station all payment procedures can be performed.

## Claims

1. A method for allowing a communication station (CS) access to a communication system, characterised in that a logical node of the communication system checks if the communication station (CS) sends at least one payment message (PM) to the communication system, wherein the payment message (PM) contains information which constitutes digital money and wherein by sending the payment message (PM) digital money for a payment of communication costs is transferred from the communication station (CS) to the communication system.

2. The method according to claim 1, characterised in that the communication station (CS) sends the payment message (PM) to pay the communication costs after having received at least one payment request message (RPAY) from the communication system.

3. The method according to claim 2, characterised in that the payment request message (RPAY) initiates more than one payment message.

4. The method according to any of the precedent claims, characterised in that the communication system sends at least one acknowledgement message (AM) for the payment message (PM) to the communication station after having received the payment message (PM).

5. The method according to any of the precedent claims, characterised in that the communication station (CS) sends digital coins to the communication system.

6. The method according to claim 5, characterised in that before the digital coins are transferred from the communication station (CS) to the communication system the digital coins are stored within the communication station (CS).

7. The method according to claim 5, characterised in that the digital coins are stored outside the communication station (CS).

8. The method according to claim 7, wherein the digital coins are stored in a personal security companion PSC.

9. The method according to claim 8, characterised in that the personal security companion and the communication station are connected through a short-range wireless link.

10. The method according to claim 9, characterised in that the personal security companion and the communication station are connected through a Bluetooth link.

11. The method according to any of the precedent claims, characterised in that digital money is refilled at the side of the communication station and/or the user who uses the communication station.

12. The method according to claim 11, characterised in that the communication station sends a buying message (BM) to a network operated by an authority which is capable of issuing and/or transferring digital money.

13. A communication system which is capable of handling communications for communication stations, characterised in that the communication system contains at least one means for receiving digital money from the communication station (CS).

14. The communication system according to claim 13, characterised in that the communication system is a multiple access communication system.

15. Processing means for use in a communication system which is capable of handling communications for communication stations (CS), characterised in that the processing means is capable of checking if digital money is received.

16. Logical node, capable of being implemented in a communication system and/or in a billing system, characterised in that the logical node is capable of checking if payment messages of communication stations (CS) are sent to the communication system according to a rule for the payment.

17. A communication station (CS), capable of communicating in a communication system, characterised in that the communication station (CS) contains at least one transferring means wherein said transferring means transfers digital money to the communication system.

18. The communication station (CS) according to claim 13, characterised in that the communication station is a mobile communication station.

19. The communication station (CS) according to any of the claims 17 to 18, characterised in that the communication station (CS) is capable of communicating in a multiple access communication system.

20. The communication station (CS) according to any of the claims 17 to 19, characterised in that the communication station (CS) contains at least one means for sending payment messages to the communication system according to a predefined rule.

21. The communication station (CS) according to claim 20, characterised in that the communication station (CS) contains means for evaluating and/or storing the rule.

22. Computer program, capable of controlling access of at least one communication station to a communication system, characterised in that the computer program initiates a transfer of digital money and/or checks if digital money for a payment of communication costs is. transferred to the communication system.

23. Computer program product, characterised in that it contains a computer program as it is described in claim 22 and that it is loadable in a communication station (CS).

24. Computer program product, characterised in that it contains a computer program as it is described in claim 23 and that it is loadable in a logical node.
